# EUROPEAN PATENT SPECIFICATION

(11) **EP 0 728 244 B1**
(45) Date of publication and mention of the grant of the patent: **04.03.1998**
(21) Application number: 95900242.9
(22) Date of filing: 11.11.1994
(51) Int. Cl.: E03F 5/04, E03F 3/04, F16L 43/00, F16L 21/04

(54) **Access gully**
Einsteigeschacht
Bouche d'égout

(30) Priority: 11.11.1993 GB 9323289
(43) Date of publication of application: 28.08.1996
(60) Divisional application: 97114691.5
(73) Proprietor: HEPWORTH BUILDING PRODUCTS LIMITED, Sheffield S30 5HG (GB)
(72) Inventor: BROOK, Alan, Blackburn BB1 2PN (GB)
(74) Representative: Mounteney, Simon James
(86) International application number: GB9402476
(87) International publication number: WO9513434

(56) References cited:
- EP-A- 0 124 888
- DE-A- 2 759 539
- FR-A- 1 241 422
- US-A- 4 198 717
- CIVIL ENGINEERING, vol.51, no.1, 1 January 1981, NEW YORK USA page 67 'everything you need the best lowcost drainage is here'

## Description

The present invention relates to a drainage system and particularly, but not exclusively, to a drainage system comprising components suitable for use with clay drainage pipes and components.

It is a well-known problem that efficiency and reliability of drainage system components can be seriously compromised by the manner in which the system is installed. If a component is difficult to install, it will require a certain degree of skill to install the component correctly. As a consequence, a constructor will need to employ skilled labour or risk having components installed in a less than perfect manner. Furthermore, it is not uncommon for labourers, skilled or otherwise, to install a component incorrectly simply through laziness or ignorance.

The various aspects of the present invention set out to provide components which can be easily installed with little or no risk of error, whilst simplifying the installation procedures in order to provide less incentive and/or opportunity for compromising installation. Furthermore, the invention sets out to provide components which are not only easy to install, but which are generally labour-saving and which are readily adaptable to different circumstances in which they might be employed, thereby reducing the need of a constructor to buy and keep a wide range of alternative components.

It can often be difficult to access a trap associated with an access gully for cleaning or other maintenance. This problem is typically a result of gully size or configuration and can be exacerbated by a poorly or incorrectly installed gully. A first aspect of the present invention sets out to provide an access gully which comprises a trap which is easy to maintain and which is easily accessible. This aspect of the invention also sets out to reduce the possibility that access will be restricted by incorrect installation of the gully.

EP-A-0 124 888 discloses a gully with a lower housing containing a dip-tube trap and an upper housing provided with an inlet grid. This gully does not provide the advantages sou by the invention.

According to a first aspect of the invention there is provided an access gully as set out in Claim 1.

In a preferred embodiment, the upper housing is rotatable in the horizontal plane with respect to the lower housing. The axis of rotation of the upper housing with respect to the lower housing is preferably generally coaxial with the vertical central axis of the dip-tube trap when installed.

By providing the grating directly above the dip-tube trap, the dip-tube trap is easily removable. Because the upper housing is configured so that the inlet situated at its upper surface is always offset from the dip-tube trap, the grating will always be situated above the dip-tube trap, therefore guaranteeing that the dip-tube trap can be removed.

By providing an upper housing which is rotatable with respect to the lower housing, we enable the upper housing to be made oblong, and to be oriented to lie flush with paving flags or the side of a building, regardless of the angle of orientation of the pipes connected with the lower housing. By making the axis of rotation of the upper housing with respect to the lower housing coaxial with the dip-tube trap, the grating can be situated on the axis of rotation and will therefore always be above the dip-tube trap regardless of the relative orientations of the two housings.

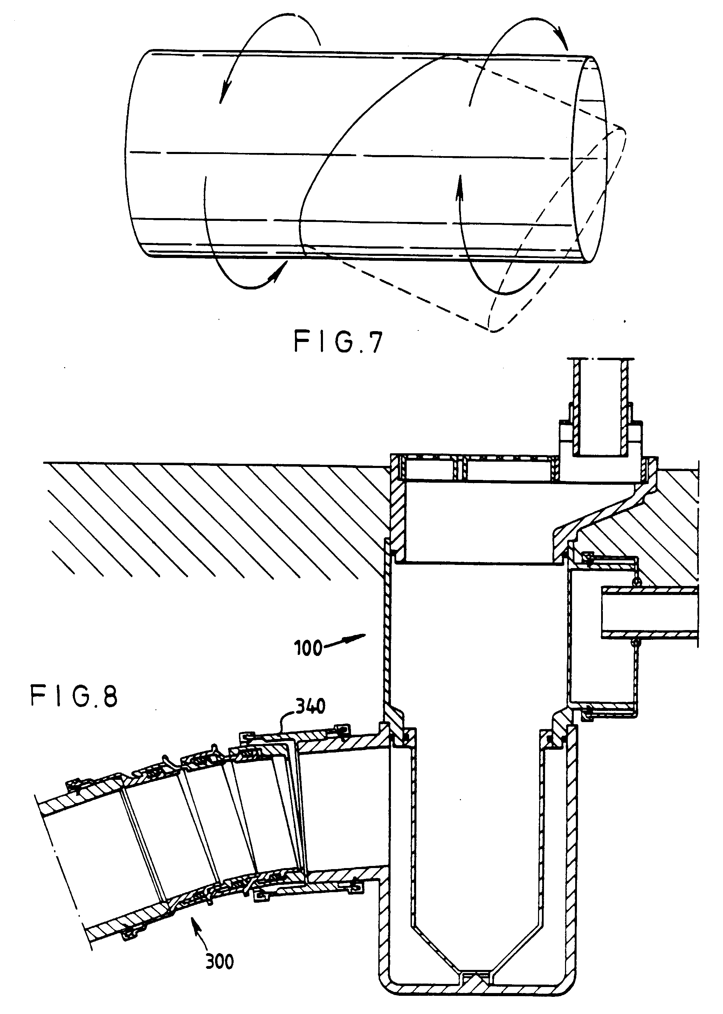

In order to enable a change of direction in a pipe or to enable a pipe to be connected to some other component at an angle, it is necessary to use a bend. Obviously, a system will require pipes to change direction many times and through various angles. This has traditionally required the constructor to carry and keep a number of bends of different bend angles. This is undesirable as it can represent a waste of space and money. This problem has been addressed by the development of an adjustable bend. The conventional adjustable bend comprises two tubular sections which are connected together by respective sheared end faces in a mutually rotatable manner. The axis of rotation is inclined at an angle to the longitudinal axes of the tubes when they are aligned concentrically. Such a bend is shown in Fig. 7.

In order to effect a bend between the two lengths of tube, they are circumferentially rotated relative to one another. The inclined connection between the two tubes resulting from the sheared nature of the connecting faces of the two tubes has the effect that, as the tubes are rotated, they will provide a bend which has a bend angle depending upon the relative circumferential rotations of the two tubes. However, in order to use this bend, it is necessary to rotate both tubes for most orientations. This is because, if one tube is held in a fixed position, as the other tube is rotated to achieve the desired bend angle, it will also be directed in a particular radial direction for each particular bend angle. It is obviously undesirable to have to rotate both tubes; particularly since this means that the adjustable bend cannot be factory-fitted to any components and must be installed on site. Installation of such a component on site can leave significant room for error, particularly if debris is introduced into a seal which is to be effected at one or the other of the two ends of the bend.

The present invention sets out to provide an adjustable bend which does not require such rotation.

In addition to the foregoing disadvantage, the known adjustable bend suffers from a further problem. Because the opposed end faces of each of the tube sections of the bend are sheared to provide the necessary angle of relative rotation, opposing end faces of the tubes are actually ellipses. This means that when the relative circumferential rotation between the two tube lengths is 90° from the coaxial position, severe steps are presented on the internal walls of the tubes. These interrupt flow and provide a region at which blockages are likely to occur. The step still exists at other angles of relative circumferential rotation, but it is not so severe. This aspect of the invention also sets out to provide an adjustable bend which does not suffer from severe interruptions to the internal wall of the bend.

Accordingly, a gully according to the invention also comprises an adjustable bend comprising a series of inter-engaging rings, each ring have a first end portion of a relatively lesser diameter and a second end portion of a relatively greater diameter, the rings being arranged such that, from ring to ring, the first end portion of one ring is slideably received within the second end portion of a successive ring, in such a manner as to allow the successive rings to deviate from a coaxial alignment by asymmetric sliding of the first end portion of one ring within the second end portion of the other ring.

Annular seals may be provided between the outer surface of a first end portion of one ring and the inner surface of the second end portion of a successive ring, to thereby seal the junction between the two rings.

The bend may have a spigot portion fitted at one or both ends. The bend may have a socket section fitted at one or both ends.

An adjustable bend of this type can be fitted to the gully at one end and the other end can then be manipulated easily to point in the desired direction. Because no rotation of the bend is required, ope end of the bend can be integrally moulded with or factory fitted onto the access gully. This means that there is less likelihood of damage or error during installation.

In a preferred embodiment each coupling between consecutive rings is axially slidable to the extent that the respective axes of the rings can be inclined through an angle of 5° with one another.

These and other preferred features of the invention are set out in Claims 2 to 7.

Embodiments of the invention will now be described, by way of example, with reference to the accompanying drawings in which:-
Figure 1 is a perspective view of an access gully in accordance with the invention;
Figure 2 is a cross-section through the access gully of figure 1 with a riser and a waste adapter installed;
Figure 3 is a vertical cross section through an alternative form of access gully;
Figure 4 is a plan view of the gully shown in figure 3;
Figure 5 is a side view of an adjustable bend;
Figure 6 is a cross-section through the adjustable bend of figure 5;
Figure 7 is a schematic view of a conventional adjustable bend;
Figure 8 is a cross-sectional view of the access gully of figure 2 with an adjustable bend similar to the one shown in figures 5 and 6 fitted at its outlet;
Figure 9 is a cross-sectional view through the sockets shown in figures 1 and 8; and
Figures 10 and 11 are radial cross sections through a socket which is a modification of that shown in figure 9.

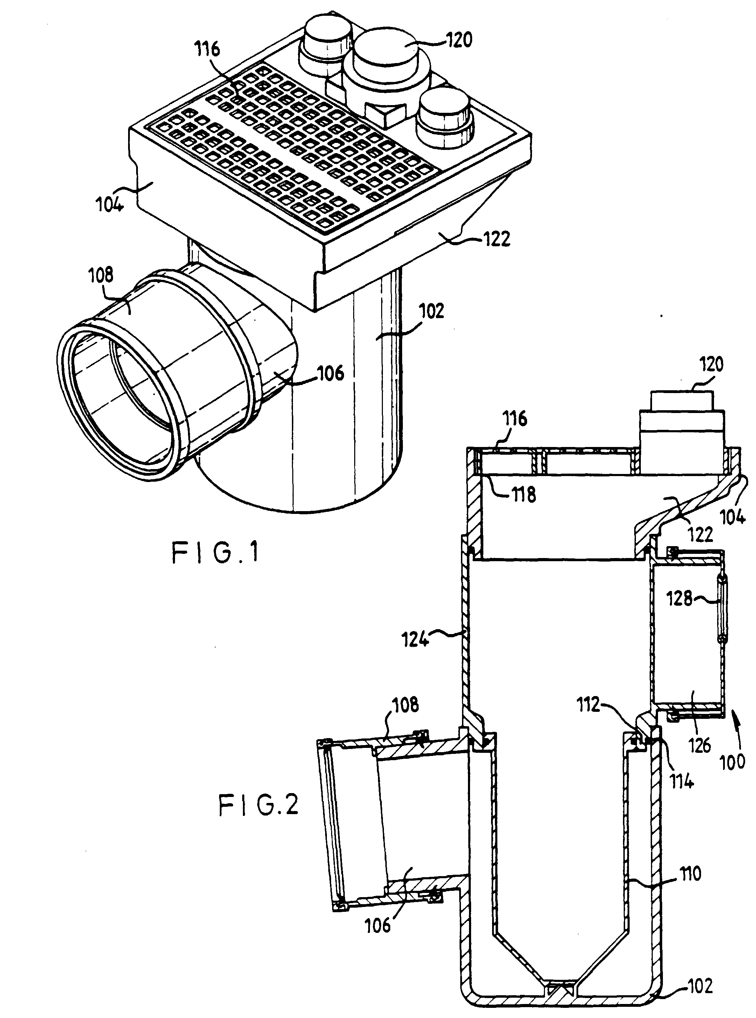

The access gully 100 which is shown in figures 1 and 2 comprises a plastics lower housing 102 and clay ware upper housing 104. The lower housing 102 may be formed using an injection moulding process and the upper housing 104 may be formed using a slip casting process. Alternatively both housings may be of plastics or of slip-casting clay.

The lower housing 102 is generally cylindrical and is closed at the bottom and open at the top, as is normal. An outlet pipe 106 feeds from the side of the lower housing 102. A factory-fitted coupling 108 is provided on the outlet pipe 106. A dip-tube trap 110 is provided coaxially within the lower housing 102. The dip-tube trap can be lifted upwards to remove it from the lower housing 102. The upper housing 104 is rectangular in plan and fitted to the upper, open end of the lower housing 102. The junction between the two housings is formed by a depending cylindrical portion 112 of the upper housing 104 which fits concentrically within the open upper end of the lower housing 102. An annular seal 114 is provided between the radially outer surface of the depending portion 112 of the upper housing 104 and the radially inner surface of the lower housing 102.

Because both the lower housing 102 and the depending portion 112 of the upper housing 104 are circular in cross-section, the depending portion 112 may be freely rotated within its seat in the lower portion 102. This enables the upper housing 104 to be rotated in the horizontal plane with respect to the lower housing 102.

The upper housing 104 is open at the top and comprises a grid 116 situated in a seat 118 which extends completely around the perimeter of the open top of the upper housing 104. The grid 116 fits into the seat 118 directly above the dip-tube trap 110. A waste/rainwater connection 120 fits into the top of a region 122 of the upper housing 104 which is offset from above the lower housing 102. The waste/rainwater connection 120 is also supported by the seat 118.

Because the top housing portion 104 is offset, this allows the upper housing portion 104 to be butted to the side of the building whilst the grid 116 is located above the dip-tube trap 110. This ensures that the dip-tube trap 110 will be easily removable once the grid 116 has been removed. As a result cleaning and rodding are greatly facilitated.

Figure 2 shows a variation in which, a riser 124 is installed between the lower housing 102 and the upper housing 104. The riser allows side access by an additional inlet 126. The side inlet 16 is fitted with an integrated side inlet spout 128. The side inlet spout 128 is formed in a cover 130 which is rotatably fitted over the inlet 126. Due to the rotatable nature of the cover 130, the position of the inlet spout 128 in the circumferential direction of the inlet 126 can be adjusted by rotating the cover 130. This has the effect of moving the vertical position of the inlet spout 128.

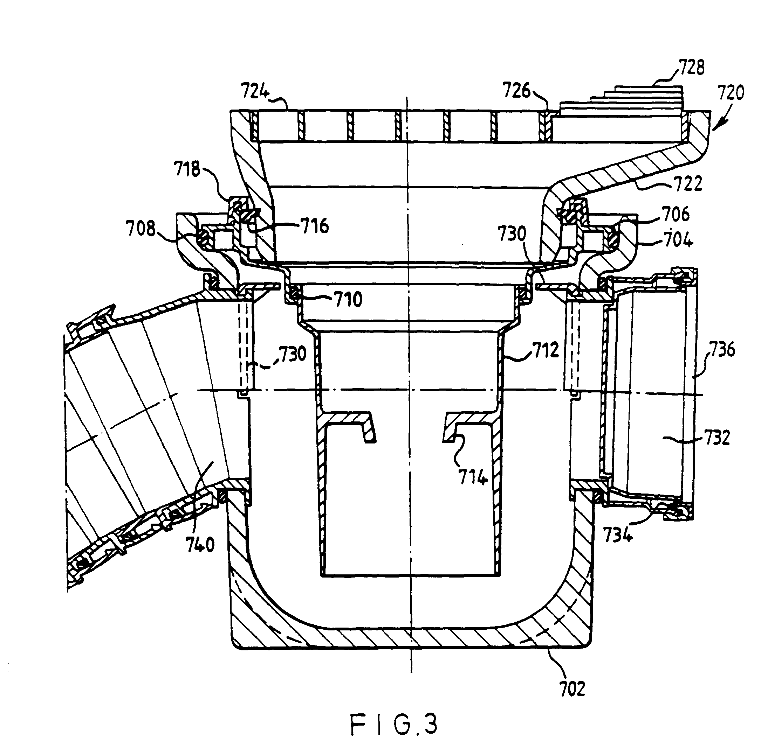

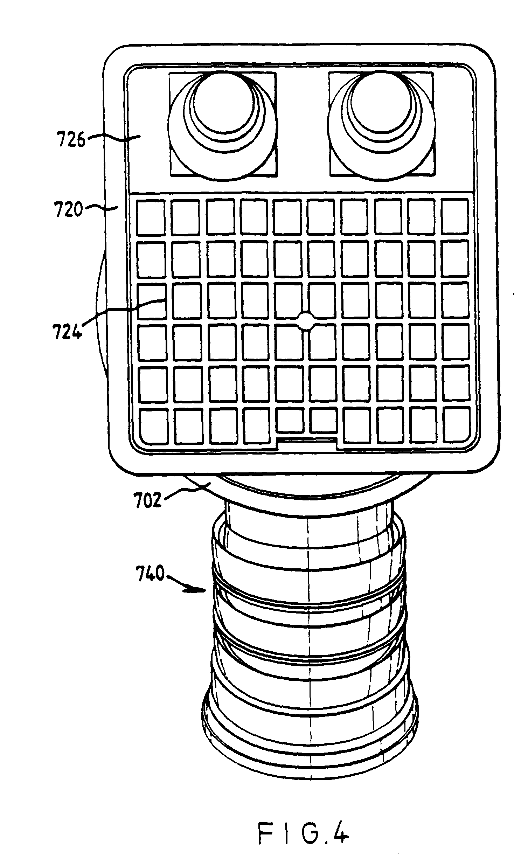

Figures 3 and 4 show another form of the access gully. This comprises a clayware (or plastics) pot 702 with an upper bell end 704 in which is seated a trap carrier 706 made of plastics for example polypropylene. The trap carrier has an external sealing ring 708 seated in the bell end, and a lower internal sealing ring 710 in its open lower end.

A polypropylene or other plastics trap 712 is seated and sealed in the open lower end of the trap carrier and projects downwardly into the gully pot 702. The trap comprises a substantially cylindrical sleeve, with internal handles flange 714 on the interior of its cylindrical wall substantially mid way along its height for use in removing and replacing the trap.

The upper side of the trap carrier is also open, and of larger diameter than the opening which receives the trap. It is provided with an internal sealing ring 716 secured for example by a snap-fastening cap ring 718. An access gully top 720 of slip-cast clayware or of plastics is seated in the trap carrier and sealed by the ring 716. As in the case of figures 1 and 2, this gully top is asymmetrical relative to the vertical centre line of the pot and trap, with an offset region 722.

A plastics or metal grid 714 is seated in the gully top directly above the trap. A plastics or metal waste/rainwater connection 726 is also seated in the gully top, alongside the grid 724.

The effects and advantages of the described arrangement are substantially as set forth with reference to figure 1 and 2.

The inlet component 726 provides two different pipe access positions. At each of these is a closure 728 consisting of stepped regions of progressively decreasing diameter. One or more of these regions can be cut or broken away by the user, to provide a circular opening to accommodate waste pipes of various different standard sizes, or a circular or square opening to accommodate rainwater pipes.

The grid and pipe access components are separate, so that the grid can be removed to give access to the trap and to enable the trap to be removed, without disturbing the pipe access component 726 and the pipe or pipes connected to it.

On one side of the gully pot, a back inlet socket 732 is provided, which has an internal seal ring 734 for receiving and sealing a pipe. When no connection is to be made to the back inlet socket it is closed by a stopper 736. The back inlet socket is seated and sealed in an opening provided in the wall of the pot, and retained by a locking plate 730.

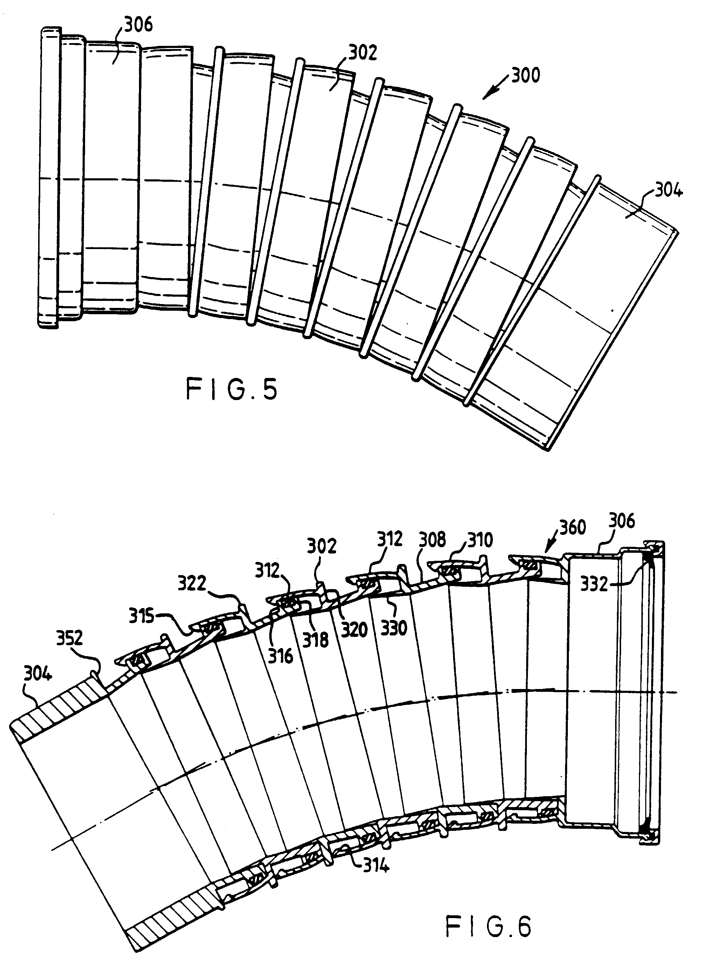

Figure 3 also shows another opening in the pot wall, in which is seated and sealed an adjustable bend 740 of plastics material for connection to a discharge pipe. This adjustable bend will be further described below with reference to figures 5 and 6. It is retained by a locking plate 730.

The adjustable bend 300 shown in figures 5 and 6 is formed from a senes of slidably interengaged rings 302, 304 and 306 of circular cross section. The rings can be divided into three types: body segments 302, male end segment 304 and female end segment 306.

The body segments 302 form the majority ofthe length of the bend 300. Each comprises a radially narrower portion 308, and an axially adjacent, coaxial, radially wider portion 310. The radially narrower portion 308 of one segment is inserted into the radially wider portion 310 of a subsequent segment 302. An annular seal 312 is provided on a radially outer surface of each radially narrower portion 308 and forms a seal between the radially outer surface of the radially narrower portion 308 of one. segment and the radially inner surface of a radially wider portion 310 of the subsequent segment 302. Each segment has an inner annular flange 330 spaced radially within the portion 310. The end of the portion 3.08 of a segment, with its seal 312, is received between the flange 330 and the outer portion 310 of the adjacent segment.

Each radially narrower portion 308 is slidably received within the radially greater portion 310 of an adjacent body segment 302. This allows two connected body segments 302 to move relative to one another in the axial direction, the circumferential direction and - by flexing of the seals 312 in combination with axial sliding - in the radial direction. In the embodiment shown, consecutive segments can provide a relative axial inclination of 5°. The overall axial inclination which can be obtained (i.e. the maximum bend angle) is approximately 30°.

Movement in the axial direction is limited by a radially inwardly directed annular lip 314 provided at the axially outer perimeter of the radially greater portion 310 of each body segment 302 and a radially outwardly directed first flange 316 provided on each radially narrow portion of each body segment 302. The abutment of opposing lips 314 and flanges 316 restricts axial separation of consecutive body segments 302 because in a connected pair of body segments 302, the flange 316 of one will be situated axially inwards of the lip 314 of the segment 302 into which it is inserted.

Each radially inner portion also comprises a radially outwardly directed second flange 318 which abuts against a step 320 provided at an axially inner end of the radially greater portion of a subsequent body segment 302, into which the segment 302 is inserted. This limits axial insertion of one body segment 302 into another.

Each radially greater portion of each body segment 302 further comprises a radially outwardly directed flange 322 which abuts against the axially outer end of a radially greater portion 310 of a subsequent body segment 302 inserted into the body segment 302. This restricts axial insertion of the body segment carrying the radially outwardly directed flange 322 into the other. Flange 322 may extend outwards beyond portion 310 to form a reinforcing rib.

The axially outer end of each radially greater portion 310 is inclined radially inwardly to present a sloping surface 315 to assist in feeding the radially smaller portion 308 of a body segment 302 to be inserted into the body segment 302 inwardly. Insertion may also be assisted by an inclined surface provided on the second flange 318 of each radially smaller portion 308 which otherwise presents the first obstacle to the insertion of one body segment 302 into another.

Each seal 312 is situated between the two radially outwardly directed flanges 318 and 316 provided on a respective radially narrower portion.

The male end segment 304 comprises a body portion having the same radially outer diameter as the basic radially outer diameter of the radially greater portions of the body segments 302. Its inner configuration at its inner end is identical to that of the inner configuration of each of the radially smaller portions 308 of the body segments 302.

The male end portion 304 differs from the body segments 302 in that it comprises a cylindrical outer surface which is free of interruption and therefore suitable for insertion into a socket. The male end segment 304 comprises an outwardly directed flange 352 which limits its axial movement against the body segment 302 onto which it is fitted.

The female end segment 306 comprises a radially larger region 360 which has an outer configuration identical to that of the larger portions 310 of the body segments 302. This connector differs from each of the body segments 302 in that, rather than a radially smaller portion 308, it comprises a socket of a type suitable for connection with a spigot or a pipe end, provided with an internal seal ring 332.

Each of the end segments may be integrally formed with some other component.

Alternatively, a component may be provided with a cylindrical portion having an inner configuration identical to that of a radially greater portion of one of the body segments 302. This would enable it to receive a radially narrower portion 308 of a body segment therein. Alternatively or additionally, the component may be provided with a cylindrical portion which has a radially outer configuration similar to that of the radially narrower portion 308 of each of the body segments 302. This would enable a body portion 302 to be fitted over this portion of the component.

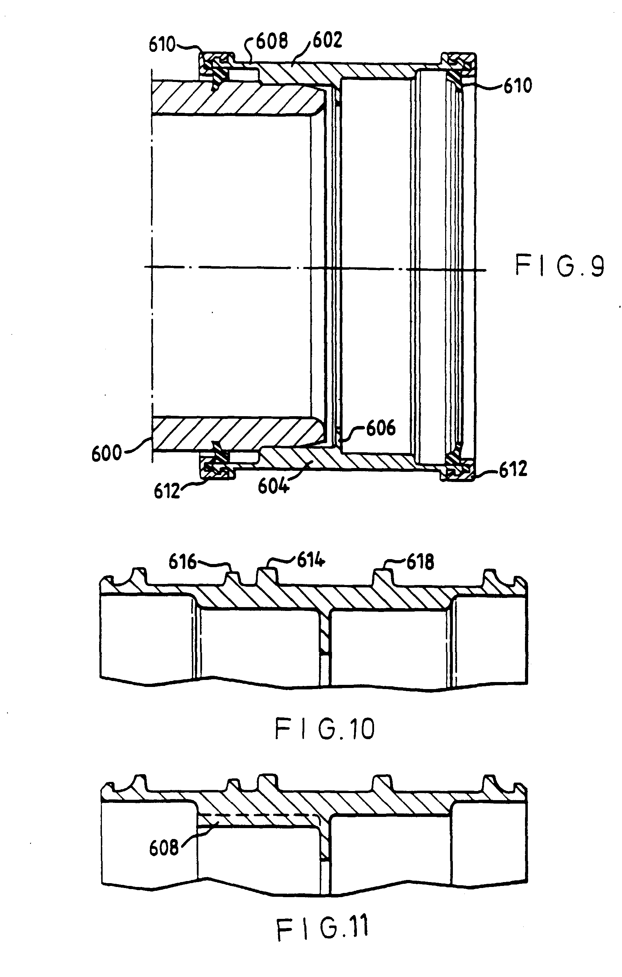

Figure 8 shows an access gully similar to the one shown in figure 2. The access gully shown in this figure has the male end portion of an adjustable bend fitted to the outlet by a pipe coupling 340. This can be done in the factory, e.g. as described below with reference to Figures 10 to 13 and the engagement can be made effectively permanent. With the bend fixed in position in this manner, the gully is very versatile and is less susceptible to poor installation quality, because there is no reason for the labourer to interfere with the connection between the gully and bend.

Figure 9 illustrates a plastics coupling assembly.

The coupling is factory-fitted and comprises a central cylindrical portion 604 comprising a radially inwardly directed flange 606 which locates against the end of the outlet pipe to assist in locating the coupling on the pipe end correctly. The cylindrical section comprises a series of radially inwardly directed sacrificial ribs 608 which deform when the ring is inserted onto the pipe end to provide a firm and permanent engagement between the coupling and the pipe end. During manufacture, each coupling is hammered or forced on to the fitting and is therefore held in position very strongly.

The couplings shown in figure 9 each comprise a radially inwardly directed annular seal 610 at each mouth of the central cylindrical portion 604. Each annular seal 610 is held in position by an annular end cap 612 which is snapped over the respective mouth of the coupling.

Figures 10 and 11 illustrate couplings for factory fitting, generally similar to that of figure 9 but modified by the addition of annular external ribs 614, 616, 618 to provide additional strength. A sacrificial rib 608 is visible in figure 11. Any desired number of these ribs can be provided, spaced around the circumference of the coupling. Typically six or eight such ribs are provided. Figure 10 shows the cross section of the coupling at a position between two of the ribs, where the internal diameter is not less than the external diameter of a pipe; the internal diameter is desirably somewhat greater than the pipe diameter, to provide space to accommodate material displaced from the sacrificial ribs.

## Claims

1. An access gully (100) comprising a lower housing (102) provided with an outlet (106) and containing a dip-tube trap (110) and an upper housing (104) connected to the lower housing (102) and comprising an inlet grid (116) in an upper region thereof, wherein the grid (116) is situated above the dip-tube trap (110) and can be removed to allow removal of the dip-tube trap; characterised in that the gully (100) further comprises an inlet pipe access (120), and the inlet pipe access (120) is disposed to one side of the grid (116), the positions of the grid (116) and the inlet pipe access (120) being dictated by the configuration of the upper housing (104) which has an off-set portion (122) for accommodating the inlet pipe.

2. An access gully (100) as claimed in claim 1 in which the upper housing (104) is rotatable in the horizontal plane with respect to the lower housing (102).

3. An access gully (100) as claimed in claim 2 in which the axis of rotation of the upper housing (104) with respect to the lower housing (102) is generally coaxial with the vertical central axis of the dip-tube trap (110) when installed.

4. An access gully (100) according to any preceding claim, further comprising an adjustable bend (300;740) fitted to the said outlet and comprising a series of inter-engaging rings (302, 304, 306), each ring having a first end portion of a relatively lesser diameter and a second end portion of a relatively greater diameter, the rings being arranged such that, from ring to ring, the first end portion of one ring is slideably received within the second end portion of a successive ring, in such a manner as to allow the successive rings to deviate from a coaxial alignment by asymmetric sliding of the first end portion of one ring within the second end portion of the other ring.

5. An access gully (100) as claimed in claim 4 in which each coupling between consecutive rings is axially slidable to the extent that the respective axes of the rings can be inclined through an angle of 5° with one another.

6. An access gully (100) according to claim 4 or 5, wherein the adjustable bend is fitted to the outlet by means of a plastics socket provided with an internal formation which permanently deforms when the socket is placed over the end of the outlet, to securely retain the socket in position upon an end region of the outlet.

7. An access gully according to claim 6, in which the formation is a sacrificial rib.

## Patentansprüche

1. Zugriff bietender Gully (100) mit einem unteren Gehäuse (102), das mit einem Auslaß (106) versehen ist und einen Tauchrohrsiphon (110) enthält, sowie einem oberen Gehäuse (104), das mit dem unteren Gehäuse (102) verbunden ist und ein Einlaßgitter (116) in seinem oberen Bereich aufweist, worin das Gitter (116) über dem Tauchrohrsiphon (110) sitzt und entfernt werden kann, um die Entnahme des Tauchrohrsiphons zu gestatten; dadurch gekennzeichnet, daß der Gully (100) ferner einen Einlaßrohrzugang (120) aufweist und der Einlaßrohrzugang (120) auf der einen Seite des Gitters (116) angeordnet ist, wobei die Lage des Gitters (116) und des Einlaßrohrzugangs (120) von der Ausbildung des oberen Gehäuses (104) vorgegeben ist, das einen versetzten Abschnitt (122) zur Aufnahme des Einlaßrohrs aufweist.

2. Zugriff bietender Gully (100), wie beansprucht in Anspruch 1, worin das obere Gehäuse (104) in der horizontalen Ebene in bezug auf das untere Gehäuse (102) drehbar ist.

3. Zugriff bietender Gully (100), wie beansprucht in Anspruch 2, worin die Drehachse des oberen Gehäuses (104) in bezug auf das untere Gehäuse (102) insgesamt koaxial ist zur vertikalen Mittelachse des Tauchrohrsiphons (110), wenn er eingebaut ist.

4. Zugriff bietender Gully (100) nach irgendeinem vorangehenden Anspruch, ferner mit einem einstellbaren Krümmer (300; 740), der am Auslaß angebracht ist und eine Reihe ineinander eingreifender Ringe (302, 304, 306) aufweist, wobei jeder Ring einen ersten Endabschnitt mit einem verhältnismäßig kleineren Durchmesser und einen zweiten Endabschnitt mit einem verhältnismäßig größeren Durchmesser aufweist und die Ringe so angeordnet sind, daß von Ring zu Ring der erste Endabschnitt des einen Rings verschieblich im Inneren des zweiten Endabschnitts des folgenden Rings aufgenommen ist, um es auf eine solche Weise zu ermöglichen, daß aufeinanderfolgende Ringe von einer koaxialen Ausrichtung durch asymmetrisches Verrutschen des ersten Endabschnitts des einen Rings innerhalb des zweiten Endabschnitts des anderen Rings abweichen.

5. Zugriff bietender Gully (100), wie beansprucht in Anspruch 4, worin jede Kupplung zwischen aufeinanderfolgenden Ringen axial bis zu dem Ausmaß verschieblich ist, daß die jeweiligen Achsen der Ringe über einen Winkel von 5° zueinander geneigt werden können.

6. Zugriff bietender Gully (100) nach Anspruch 4 oder 5, worin der einstellbare Krümmer am Auslaß mittels einer Kunststoff-Fassung angebracht ist, die mit einer inneren Ausbildung versehen ist, die sich bleibend verformt, wenn die Fassung über dem Ende des Auslasses angeordnet wird, um die Fassung zuverlässig in ihrer Lage auf einem Endbereich des Auslasses zu halten.

7. Zugriff bietender Gully nach Anspruch 6, worin die Ausbildung eine nachgiebige bzw. wegbrechende Rippe ist.

## Revendications

1. Puisard d'accès (100) comprenant un boîtier inférieur (102), comportant une sortie (106) et contenant un siphon à tube plongeur (110), et un boîtier supérieur (104), connecté au boîtier inférieur (102) et comprenant une grille d'entrée (116) dans une région supérieure correspondante, la grille (116) étant située au-dessus du siphon à tube plongeur (110) et pouvant être enlevée pour permettre l'enlèvement du siphon à tube plongeur; caractérisé en ce que le puisard (100) comprend en outre une trappe d'accès au tuyau d'entrée (120) et en ce que la trappe d'accès au tuyau d'entrée (120) est agencée sur un côté de la grille (116), les positions de la grille (116) et de la trappe d'accès au tuyau d'entrée (120) étant déterminées par la configuration du boîtier supérieur (104), comportant une partie décalée (122) pour recevoir le tuyau d'entrée.

2. Puisard d'accès (100) selon la revendication 1, dans lequel le boîtier supérieur (104) peut tourner dans le plan horizontal par rapport au boîtier inférieur (102).

3. Puisard d'accès (100) selon la revendication 2, dans lequel l'axe de rotation du boîtier supérieur (104) par rapport au boîtier inférieur (102) est généralement coaxial à l'axe central vertical du siphon à tube plongeur (110) après l'installation.

4. Puisard d'accès (100) selon l'une quelconque des revendications précédentes, comprenant en outre une partie courbée réglable (300; 740) fixée à ladite sortie et comprenant une série d'anneaux engagés les uns dans les autres (302, 304, 306), chaque anneau comportant une première partie d'extrémité ayant un diamètre relativement plus réduit et une deuxième partie d'extrémité ayant un diamètre relativement plus grand, les anneaux étant agencés de sorte que, d'un anneau vers l'autre, la première partie d'extrémité d'un anneau est reçue par glissement dans la deuxième partie d'extrémité d'un anneau successif, de manière à permettre la déviation des anneaux successifs d'un alignement coaxial, par glissement asymétrique de la première partie d'extrémité d'un anneau dans la deuxième partie d'extrémité de l'autre anneau.

5. Puisard d'accès (100) selon la revendication 4, dans lequel chaque accouplement entre des anneaux consécutifs peut être glissé axialement sur une étendue telle que les axes respectifs des anneaux peuvent être inclinés d'un angle de 5° les uns par rapport aux autres.

6. Puisard d'accès (100) selon les revendications 4 ou 5, dans lequel la partie courbée réglable est fixée à la sortie par l'intermédiaire d'un manchon en plastique, comportant une structure interne soumise à une déformation permanente lorsque le manchon est placé au-dessus de l'extrémité de la sortie, en vue d'assurer le maintien en position du manchon sur une région d'extrémité de la sortie.

7. Puisard d'accès selon la revendication 6, dans lequel la structure est une nervure sacrificielle (perdue).
